# EUROPEAN PATENT SPECIFICATION

(11) **EP 2 578 342 B1**
(45) Date of publication and mention of the grant of the patent: **11.01.2017**
(21) Application number: 12187379.8
(22) Date of filing: 05.10.2012
(51) Int. Cl.: B23D 59/04, B23D 59/02

(54) **Water injection type cutting tools**
Schneidwerkzeug vom Wasserinjektionstyp
Outils de coupe du type à injection d'eau

(30) Priority: 07.10.2011 JP 2011222591
(43) Date of publication of application: 10.04.2013
(73) Proprietor: Makita Corporation, Anjo, Aichi 446-8502 (JP)
(72) Inventor: Ogino, Yohei, Anjo, Aichi 446-8502 (JP); Abe, Kenji, Anjo, Aichi 446-8502 (JP); Hattori, Kazunori, Anjo, Aichi 446-8502 (JP)
(74) Representative: Kramer Barske Schmidtchen Patentanwälte PartG mbB

(56) References cited:
- JP-A- 5 318 404

## Description

Embodiments of the present invention relate to water injection type cutting tools that can be used for cutting work-pieces, as per the preamble of claim 1. An example of such a tool is disclosed by JP -A-5-318404. The cutters of such cutting tools can be cooled by water
injected from within water storage tanks.

Known water injection type cutting tools are generally configured as hand-held tools and can be held by users for performing cutting operations. Typically, water injection type cutting tools include a circular cutter and a water storage tank. For example, a known water injection type cutting tool used for cutting glass or concrete includes a diamond wheel as a cutter, and a water storage tank for injecting water that may cool the rim (tips) of the wheel. This type of cutting tool is disclosed, for example, in JP-A-5-318404 and JP-A-9-193136. With the cutting tools of these documents, water may be injected on a portion of the cutter, which cuts a workpiece, so that tips of the cutter may be cooled and cut powder may be prevented from scattering to the surroundings. In this way, the cutting operation may be efficiently performed.

However, the cutting tools disclosed in JP-A-5-318404 and JP-A-9-193136 still require further improvements regarding a balance in weight of the cutting tools when the user holds the cutting tools by grasping handles provided on the cutting tools.

In the case of the cutting tool disclosed in JP-A-5-318404, the water storage tank is located in such a manner that the water storage tank extends over a cutter case covering the upper portion of the cutter. In this way, both the cutter and the water storage tank can be located on the same side with respect to the handle. In the case of the cutting tool disclosed in JP-A-9-193136, while the water storage tank is located on an opposite side of the cutter with respect to the handle, the water storage tank is located away from the lateral side of the handle when viewed in a plan view.

Therefore, the cutting tools disclosed in JP-A-5-318404 and JP-A-9-193136 have a problem with respect to a weight balance when the user holds the handle of the cutting tool. For this reason, it is necessary for the user to apply a relatively large force to his or her hand in order to keep the cutting tool at a suitable position. Hence, with the cutting tools of these publications, extended use of the cutting tools may lead to increased fatigue of the user. Therefore, the usability of such cutting tools is not good.

Additionally, each of the cutting tools disclosed in JP-A-5-318404 and JP-A-9-193136 have a battery pack mounted to a rear portion of the handle. Although the battery pack has a relatively large weight, the weight balance between the water storage tank and the battery pack has not been taken into account in the cutting tools of these publications.

Therefore, there has been a need in the art for water injection type cutting tools that are improved in weight balance.

The above mentioned object is solved by providing a water injection type cutting tool according to claim 1.

In one aspect according to the present teachings, a water injection type cutting tool may include a handle configured to be grasped by a user, a base configured to contact an upper surface of a workpiece to be worked; and a tool unit supported on an upper surface of the base. The tool unit includes a cutter and a water storage tank positioned on opposite sides with respect to the handle when viewed in a cut proceeding direction. The water storage tank includes a tank body configured to store water that is injected on a cutting portion of the cutter, which cuts the workpiece. An end portion of the tank body of the water storage tank on a downstream side with respect to a direction of flow of water from the tank body is positioned within a range of the base when viewed in a plan view.

Due to the fact that the cutter and the water storage tank are positioned on opposite sides with respect to the handle when viewed in the cut proceeding direction, the cutting tool can be balanced in term of its weight when the user grasps the handle for holding the cutting tool. Therefore, the usability of the cutting tool can be improved.

In addition, because the downstream-side end portion of the tank body of the water storage tank is positioned within a range of the base when viewed in a plan view, it is possible to position the gravity center of the tank body such that the gravity center is positioned within the base or closer to the base when viewed in a plan view. Also in this respect, the weight of the tank body is balanced to enable reduction of fatigue of the user and to improve the stability of the cutting tool.

The tank body may be inclined such that a downstream side portion of the tank body is closer to the cutting portion of the cutter than an upstream side portion of the tank body when viewed in a plan view. In typical cases in the known art, the tank body extends parallel to the handle. Because the tank body is necessary to store a certain amount of water, the tank body is configured to have a cylindrical shape with a relatively large diameter. For this reason, the tank body of the known art is spaced from the handle by a certain distance. By positioning the tank body such that the downstream side portion of the tank body is closer to the cutting portion of the cutter as described above, the center of gravity of the tank body containing water stored therein may be set to be closer to the handle. In this way, the weight of the tank body can be balanced to improve the usability of the cutting tool.

The tank body may be inclined relative to a longitudinal axial line of the handle by a first angle when viewed in a plan view. Furthermore, the tank body is inclined relative to a surface of the base by a second angle when viewed in a side view. This second angle is set larger than the first angle. Also with this arrangement, the gravity center of the tank body containing water stored therein may be set closer to the handle. In this way, the weight of the tank body can be balanced and thereby improve the usability of the cutting tool.

The cutting tool may further include a hose connector for connecting the tank body of the water storage tank to a water injection hose. The hose connector is positioned downwardly of a shoulder portion of the tank body when viewed in a side view. With this arrangement, it is possible to effectively inject water from within the tank body to the cutting portion of the cutter via the water injection hose.

The tool unit may include a drive motor having a motor housing, and the tank body may be supported by the motor housing via a bracket. In one embodiment, the position of the tank body is adjustable in a direction substantially perpendicular to the cut proceeding direction. With this arrangement, the balance with regard to the weight of the tank body with respect to the handle can be easily achieved by adjusting the position of the tank body relative to the handle in the direction substantially perpendicular to the cut proceeding direction. In another embodiment, the bracket includes a support rod extending in a substantially vertical direction, so that the weight of the water storage tank is applied to the support rod in an axial direction of the support rod. With this arrangement, the tank body having a relatively large weight due to water stored therein can be securely supported at a relatively high level.

Additional objects, features, and advantages, of the present teachings will be readily understood after reading the following detailed description together with the claims and the accompanying drawings, in which:
FIG 1 is a right side view of a water injection type cutting tool according to an embodiment of the present teachings;
FIG. 2 is a front view of the cutting tool when viewed in a direction indicated by arrow (II) in FIG. 1;
FIG. 3 is a left side view of the cutting tool when viewed in a direction indicated by arrow (III) in FIG. 2;
FIG. 4 is a rear view of the cutting tool when viewed in a direction indicated by arrow (IV) in FIG. 3;
FIG. 5 is a plan view of the cutting tool when viewed in a direction indicated by arrow (V) in FIG. 4;
FIG. 6 is a vertical sectional view of a tank body of a water storage tank of the cutting tool;
FIG. 7 is a vertical sectional view of the cutting tool taken along line (VII)-(VII) in FIG. 3 showing a hose connector in cross section;
FIG. 8 is a right side view of the cutting tool showing the state where a cutting depth of a cutter is set at a minimum depth; and
FIG. 9 is a front view of the cutting tool showing the state where a tool unit is inclined rightward.

Each of the additional features and teachings disclosed above and below may be utilized separately or in conjunction with other features and teachings to provide improved water injection type cutting tools. Representative examples of the present invention, which examples utilize many of these additional features and teachings both separately and in conjunction with one another, will now be described in detail with reference to the attached drawings. This detailed description is merely intended to teach a person of ordinary skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful examples of the present teachings. Various examples will now be described with reference to the drawings.

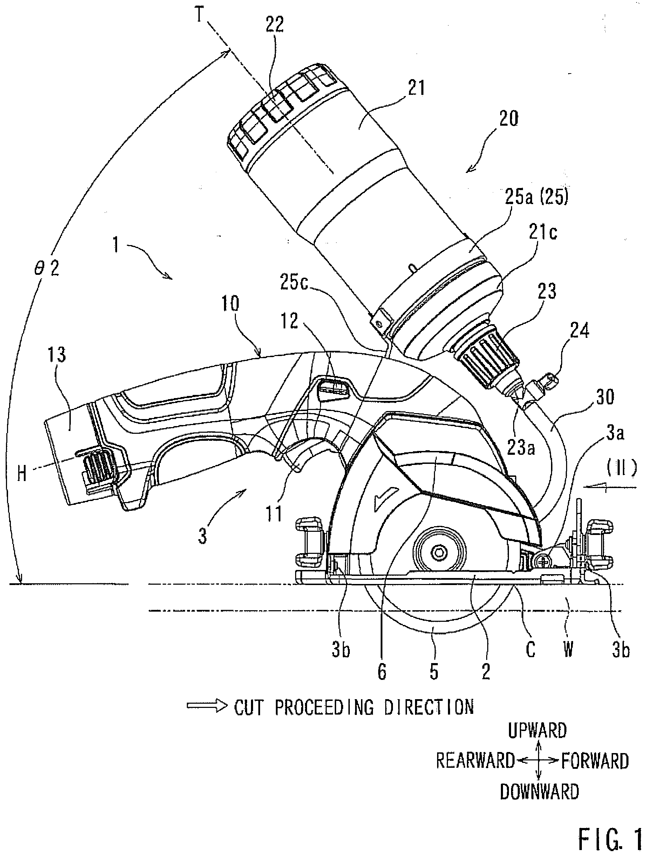

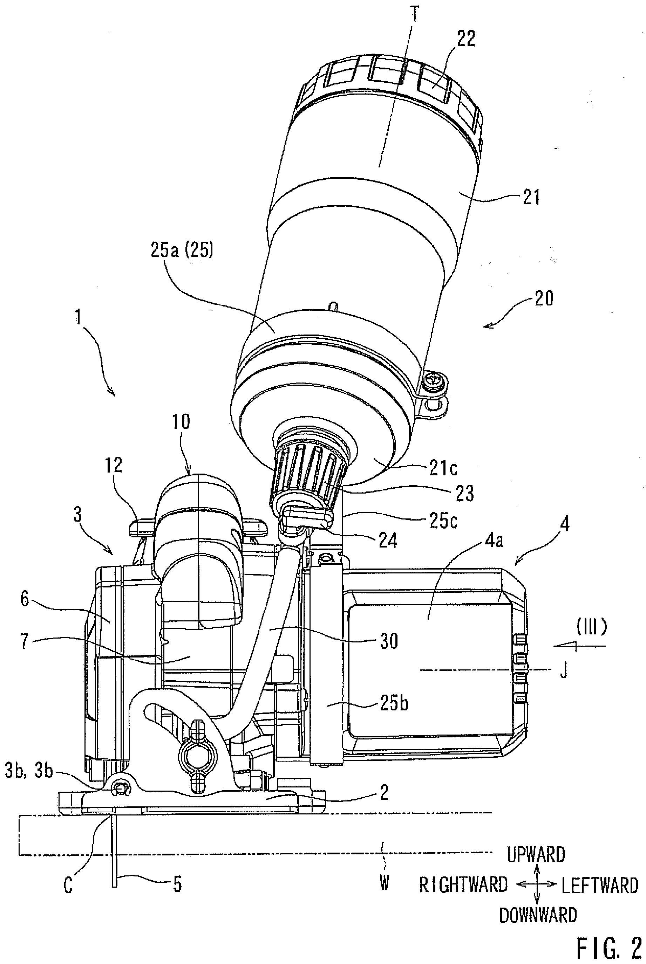

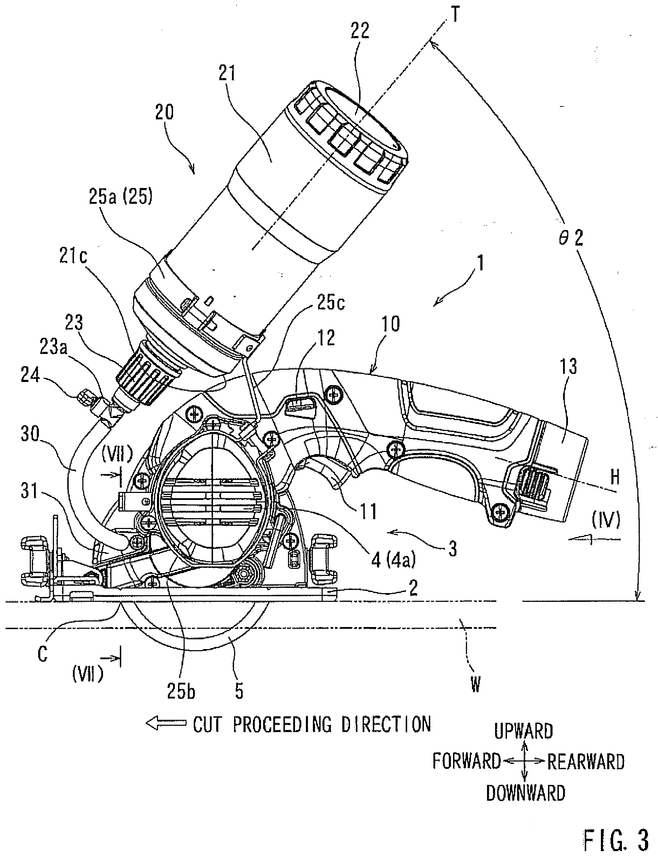

An embodiment will now be described with reference to FIGS. 1 to 9. Referring to FIGS. 1 to 5, there is shown a water injection type cutting tool 1 according to the embodiment. The cutting tool 1 is configured as a hand-held tool and generally includes a base 2 for contacting an upper surface of a workpiece W, such as a glass plate, a tool unit 3 supported on the upper surface of the base 2, and a water storage tank 20 mounted to the tool unit 3.

The tool unit 3 includes a circular cutter 5 that may be rotatably driven by a driver motor 4, such as an electric motor. The cutter 5 may be a diamond wheel having a plurality of tips at its peripheral portion. A cutter case 6 may cover substantially an upper circumferential half of the cutter 5. A reduction gear section 7 accommodating a reduction gear train (not shown) may be joined to the left side of the cutter case 6. A drive motor 4 is mounted to the reduction gear section 7 to extend laterally leftward therefrom. A motor axis J of the drive motor 4 extends in a direction substantially perpendicular to a cut proceeding direction. In this specification, the term "cut proceeding direction" is used to mean a direction for moving the cutting tool 1 for cutting the workpiece W by the cutter 5.

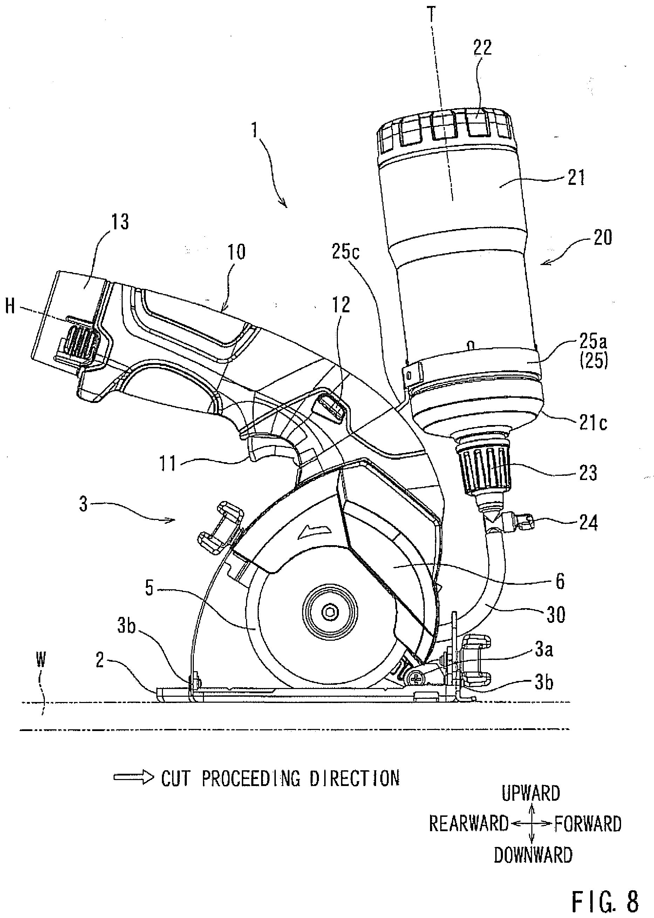

The tool unit 3 is vertically pivotally supported on the base 2 via a vertical pivot shaft 3a. As the tool unit 3 vertically pivots about an axis of the vertical pivot shaft 3a, a downwardly protruding distance of the cutter 5 from the lower surface of the base 2 may change. In this way, the depth with respect to how far the cutter 5 cuts into the workpiece W can be adjusted. In this embodiment, the cutting depth can be adjusted between a maximum depth shown in FIG. 1 and a minimum cutting depth shown in FIG. 8. In this kind of cutting tool 1, the maximum depth shown in FIG. 1 may be most frequently used. A groove can be formed in the workpiece W by setting the cutting depth of the cutter 5 to be smaller than the thickness of the workpiece W.

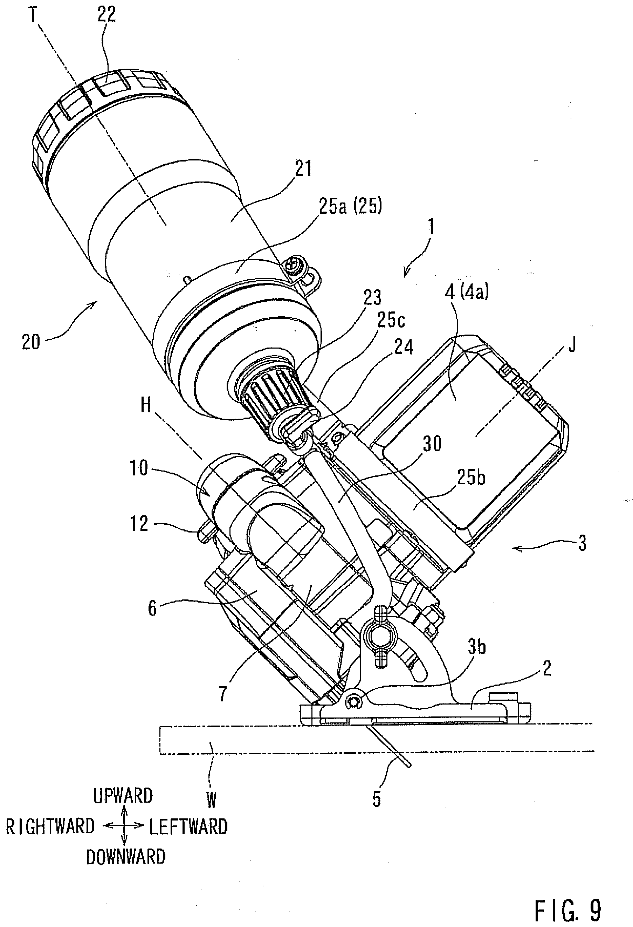

In addition, the tool unit 3 is laterally pivotally supported on the base 2 via lateral pivot shafts 3b that have a same axis and are mounted to the upper surface of the base 2. In this embodiment, the tool unit 3 may be pivoted mainly in the right direction with respect to the cut proceeding direction. With the tool unit 3 pivoted in the right direction as shown in FIG. 9, it is possible to obliquely cut the workpiece W with the cutter 5.

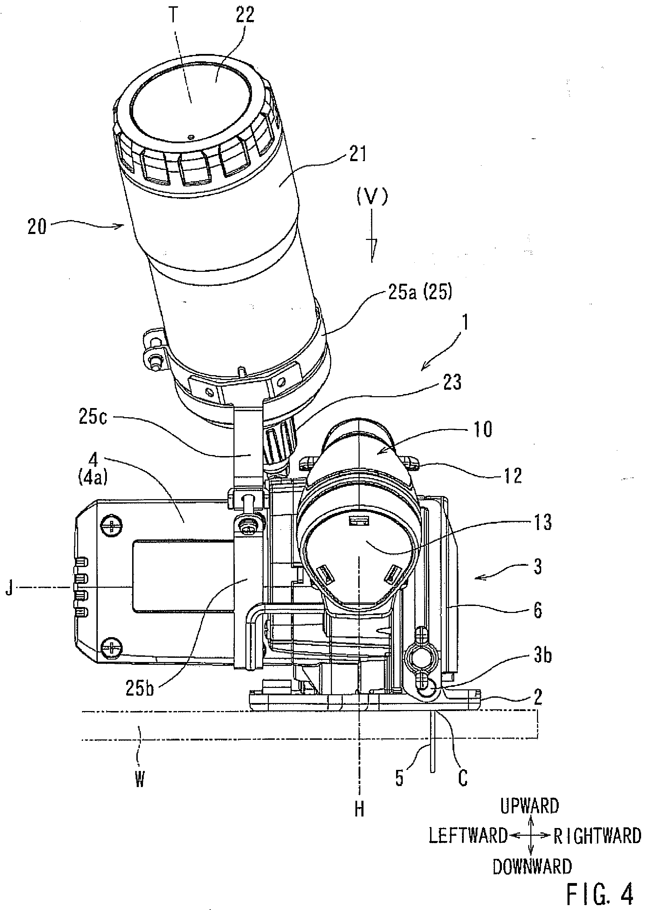

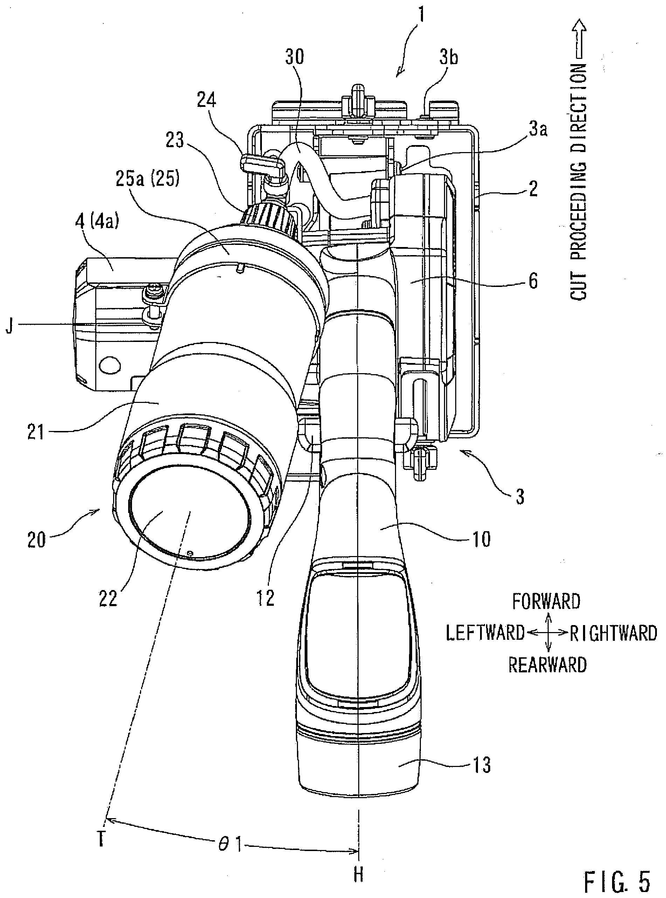

The tool unit 3 may include a handle 10 that can be grasped by the user. In this embodiment, the handle 10 extends rearwardly from the upper portion of the reduction gear section 7 by a relatively large distance in the forward and rearward direction. A longitudinal central line H (hereinafter also called "handle axis H") of the handle 10 may extend substantially in the same direction as the cut proceeding direction. More specifically, the handle axis H extends within a plane substantially parallel to the cut proceeding direction (see FIGS. 4 and 5). In other words, the handle axis H extends within the same plane as a surface of the cutter 5. In this embodiment, the handle axis H is curved such that its rear portion is decline when viewed from the lateral side (see FIG. 1).

A trigger-type switch lever 11 may be mounted to the lower side of the base portion of the handle 10. While the user grasps the handle 10 with his or her one hand, the user can push the switch lever 11 by using fingers of the same hand. Accordingly, switch lever 11 causes the drive motor 4 to rotate the cutter 5. A lock-on switch 12 may be mounted to the right side of the handle 10 and can be operated whereby the switch lever 11 can be held in the pushed position.

A rechargeable battery pack 13 may be detachably mounted to the rear portion of the handle 10. The drive motor 4 rotates via electric power from the battery pack 13. The battery back 13 may be detached from the rear portion of the handle 10 for recharging by a battery charger. The battery charger may be provided separately from the cutting tool 1 for charging the battery pack 13.

The water storage tank 20 may be supported by the drive motor 4 via a bracket 25. The water storage tank 20 may include a cylindrical tank body 21, a closure member 22 for closing a rear opening of the tank body 21, and a hose connector 23 for connecting a water injection hose 30 to the front end of the tank body 21. In this embodiment, the rear opening of the tank body 21 is configured as a water filling opening 21a which will be explained later. The bracket 25 may include a first annular portion 25a, a second annular portion 25b and a support rod 25c. The first annular portion 25a may be attached to the tank body 21 such that the first annular portion 25a is wound around the tank body 21. A second annular portion 25b may be attached to a motor housing 4a of the drive motor 4 such that the second annular portion 25b is wound around the motor housing 4a. The support rod 25c serves to connect the first annular portion 25a and the second annular portion 25b. The first annular portion 25a may be tightened around the tank body 21 so as to be fixed relative to the tank body 21 by using a fixing screw. Similarly, the second annular portion 25b may be tightened around the motor housing 4a by using a fixing screw.

Through loosening and fastening the fixing screws and tightening the positions of the first annular portion 25a and the second annular portion 25b with respect to the tank body 21 and motor housing 4a can be changed. In this way, it is possible to change the position of the tank body 21 with respect to the tool unit 3. In particular, the tightening position of the second annular portion 25b with respect to the motor housing 4a can be changed with respect to the direction of the motor axis J and/or it can be changed with respect to the circumferential direction about the motor axis J. With this change of the tightening position, it is possible to adjust the position of the tank body 21 in the direction perpendicular to the cut proceeding direction.

By way of the connection rod 25c, the central axis of the first annular portion 25a may be inclined relative to the central axis of the second annular portion 25b. The central axis of the second annular portion 25b is positioned on the same axis as the motor axis J. With this arrangement, the tank body 21 is supported such that its central axis (tank axis T) can be inclined relative to the handle axis H and the cut proceeding direction by an angle of θ1 when viewed in a plan view (see FIG. 5). In this embodiment, the angle of θ1 may be set to be 10°. However, the angle of θ1 may be suitably set within a range of between about 0° and about 15°. In this way, the tank body 21 can be inclined such that, (when viewed in a plan view), its one end on the side opposite to the closure member 22, i.e., the side of an end portion 23a of the hose connector 23 for connection with the hose 30, is positioned to be closer to a cutting part C of the cutter 5 more than the opposite end on the side of the closure member 22. The cutting part C cuts into the workpiece W. In this way, the tank body 21 is inclined when viewed in a plan view.

Further, the central axis of the first annular portion 25a of the bracket 25 is inclined relative to the second annular portion 25b when viewed from the lateral side (right side). Therefore, when the cutting depth of the cuter 5 is set at the maximum depth (as shown in FIG. 1), the tank axis T of the tank body 21 can be inclined upwardly relative to the lower surface of the base 2 by an angle of θ2. In this example, the angle of θ2 is set to be 70°. However, the angle of θ2 may be suitably set within a range of between about 30° and about 90°. Therefore, the tank body 21 can be inclined such that, when viewed in a side view, its one end on the side opposite to the closure member 22 (i.e., the side of the end portion 23a of the hose connector 23 for connection with the hose 30) is positioned to be closer to the cutting part C of the cutter 5 than the opposite end on the side of the closure member 22. In this way, the tank body 21 is also inclined when viewed from a side view.

In this embodiment, the inclination angle of θ2 when viewed in a side view of the tank body 21 is set to be larger enough than the inclination angle of θ1 when viewed in a plan view. Therefore, as best shown in FIGS. 1 to 4, substantially all of the tank body 1 is positioned upwards of the handle 10. Hence, the tank body 21 is supported to be positioned closer to the handle 10. However, the tank body 21 preferably does not contact the handle 10 and preferably does not interfere with the operation of the handle 10 when the user grasps the handle 10. Therefore, an ease in grasping the handle 10 can be ensured.

In addition, the inclination angle of θ2 when viewed in a side view of the tank body 21 may be set to be large enough such that the hose connector 23 of the tank body 21 is positioned below the lower end of a shoulder portion 21c of the tank body 21. Therefore, even in the case that the cutting depth of the cutter 5 is set at the maximum depth as shown in FIG. 1, it is possible to effectively inject water from within the tank body 21 and to ensure the visibility of the cutting part C.

Further, when the cutting depth of the cutter 5 is set at the maximum depth, the support rod 25c of the bracket 25 may extend substantially in the vertical direction. Therefore, the weight of the tank body 21 including water stored therein may be applied as an axial force to the support rod 25c rather than as a bending force. In this way, it is possible to minimize potential deformation or displacement of the support rod 25c.

The hose connector 23 of the tank body 21 may be connected to a cock 24 that can be manually opened and closed. More specifically, the user can pinch the cock 24 with his or her fingers for rotating the cock 24. Rotating the cock 24 in one direction can open the cock 24, so that water can flow from within the tank body 21 and into the injection hose 30. On the other hand, rotating the cock 24 in the opposite direction can close the cock 24, so that water can be prevented from flowing within the tank body 21 and into the injection hose 30.

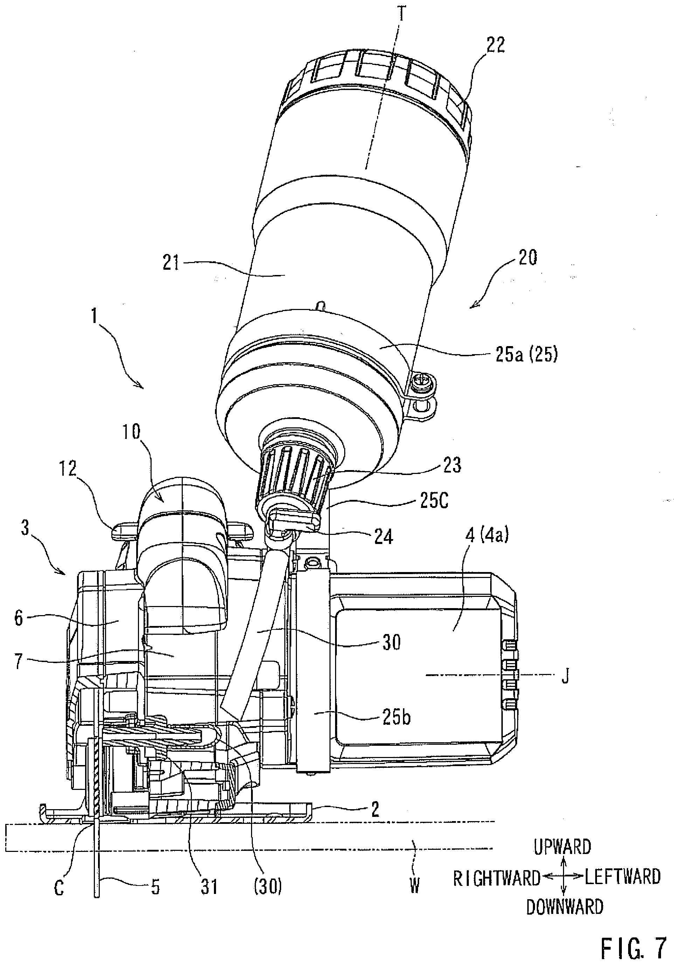

The lower end (downstream end) of the injection hose 30 may be positioned proximal to the cutting portion C of the cutter 5. As shown in FIG. 7, a water injection nozzle 31 may be attached to the left side of the cutter case 6 so as to be positioned on the left side of the cutting portion C. The water injection nozzle 31 is connected to the lower end of the injection hose 30 and is oriented toward a point slightly above the cutting portion C. Therefore, when the cock 24 is opened, water may be injected from the water injection nozzle 31 on the cutting portion C, so that the cutter 5 may be cooled and cut powder may be prevented from being scattered.

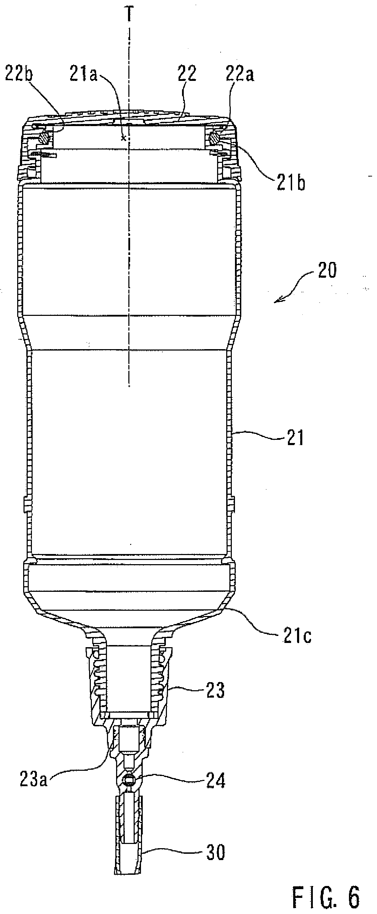

As shown in FIG. 6, the tank body 21 includes the water filling opening 21a formed at its axial end on the side of the closure member 22. The water filling opening 21a is used for filling water into the tank body 21 and can be closed by the closure member 22. The closure member 22 can be threadably engaged with the axial end portion of the tank body 21 and used for closing the water filling opening 21a. Therefore, the closure member 22 can be mounted to and removed from the tank body 21 by rotating it in opposite directions about the tank axis T. A seal ring 21b formed of resilient material, such as rubber, may be attached to the outer circumference of the axial end portion of the tank body 21 having the water filling opening 21a so as to extend around its entire circumference. A pressing wall portion 22a may be formed on the inner circumferential wall of the closure member 22 along its entire circumference to protrude radially inwardly therefrom. The lower part of the pressing wall portion 22a includes a tapered surface 22b extending along its entire circumference. Therefore, as the closure member 22 is rotated and tightened against the axial end portion of the tank body 21, the tapered surface 22b may contact the seal ring 21b so as to be pressed against the seal ring 21b immediately before the closure member 22 is completely tightened. With this arrangement, the closure member 22 can be easily rotated with a small force until the tapered surface 22b contacts the seal ring 21b. When the closure member 22 has been completely tightened, the tapered surface 22b forces the seal ring 21b to be resiliently compressed to reduce its outer diameter, so that it is possible to ensure a water seal of the closure member 22.

Because water may be filled into the tank body 21 by removing the closure member 22, it is not necessary to remove the tank body 21 from the tool unit 3 when the tank body 21 is filled with water.

With the cutting tool 1 of this embodiment, the tank body 21 of the water storage tank 20 stores water that is injected on a point proximal the cutting portion C. The tank body 21 is supported by the tool unit 3 so as to be positioned on the side opposite the cutter 5 (or the cutter case 6) with respect to the handle 10. In this way, the tank body 21 and the cutter 5 may be balanced in weight about the handle 10. In particular, in the case that an oblique cutting operation is performed with the tool unit 3 inclined rightward when viewed in the cut proceeding direction as shown in FIG. 9, the tank body 21 may be positioned on the upper side of the cutter 5 and the handle 10. In this way, the overhang load applied to the handle 10 by the tank body 21 may be reduced. The weight balance of the cutting tool 1 is improved also in this respect. Hence, the user can easily hold and move the cutting tool 1 by grasping the handle 10 with a small force.

In addition, the tank body 21 is inclined relative to the handle 10 by the inclination angle of θ1 when viewed in a plan view. It is also inclined relative to the handle 10 by the inclination angle of θ2 when viewed in a side view. Because the tank body 21 is positioned to be three-dimensionally inclined relative to the handle 10, the center of gravity of the tank body 21 containing water stored therein may be set to be closer to the handle 10. In this way, the overhang load applied by the tank body 21 can be minimized. In this way, the weight of the tank body 21 can be balanced to enable the user to easily move the cutting tool 1 by holding the handle 10 with a small force.

Further, the end portion of the tank body 21 on the side opposite the closure member 22 (i.e., the side of an end portion 23a of the hose connector 23) is positioned within range of the base 2 when viewed in a plan view. In other words, the end portion of the tank body 21 overlaps with the base 2 when viewed in a plan view. Therefore, it is possible to position the center of gravity of the tank body 21 such that the center of gravity is positioned within the base 2 or closer to the base 2 when viewed in a plan view. Also in this respect, the weight of the tank body 21 can be balanced to reduce fatigue in the user and therefore improve the stability of the cutting tool 1.

Furthermore, because the inclination angle of θ2, when viewed in a side view, is set to be larger than the inclination angle of θ1 when viewed in a plan view, it is possible to avoid interference of the tank body 21 with the handle 10. In this way, the tank body 21 can be positioned close to the handle 10. Therefore, it is possible to further improve the balance in weight of the tank body 21 with respect to the handle 10. This results in improving the usability of the cutting tool 1.

Furthermore, because the inclination angle of θ2, when viewed in a side view, is set to be large, the hose connector 23 may be positioned on the lower side of the shoulder portion 21 c of the tank body 21. Therefore, water stored in the tank body 21 can be reliably efficiently injected on the cutting portion C via the water injection hose 30.

Furthermore, by setting the inclination angle of θ2 to be large, it is possible to ensure that the handle 10 can be easily grasped, and it is possible to ensure the visibility of the cutting portion C. Therefore, the usability of the cutting tool 1 can be further improved.

Furthermore, by adjusting the position of the second annular portion 25b of the bracket 25, it is possible to adjust the position of the tank body 21 in the direction of the motor axis J. Therefore, the balance in weight of the tank body 21 with respect to the handle 10 can be easily adjusted for optimal convenience.

When the cutting depth of the cutter 5 is set at the maximum cutting depth that is most frequently used, the support rod 25c of the bracket 25 may be positioned to extend substantially vertically. Therefore, the most of the weight of the tank body 21 may not be applied to the support rod 25c as a bending force but may be applied as an axial force. Hence, the tank body 21 having a relatively large weight due to water stored therein can be supported in stable at a higher level. In addition, because the weight of the tank body 21 is applied to the support rod 25c as an axial force, it is possible to prevent unintentional deformation of the support rod 25c. Therefore, it is possible to improve the durability of the water storage tank 20 and eventually the durability of the cutting tool 1.

The above embodiment may be modified in various ways. For example, the inclination angle θ1 may be set to be larger than the range of between about 0° and about 15°, and the inclination angle θ2 may be set to be smaller or larger than the range of between 30° and 90°.

In addition, it may be possible to omit the closure member 22 and the water filling opening 21a. The tank body 21 does not necessarily have a cylindrical shape. For example, the tank body 21 may have a rectangular tubular shape or an irregular three-dimensional shape.

Further, although the tank body 21 is supported on the drive motor 4 via the annular support portion 25b of the bracket 25 in the above embodiment, the tank body 21 may be supported on any other portion of the tool unit 3, such as the handle 10 or the reduction gear section 7.

Furthermore, although the cutting tool 1 of the above embodiment utilizes the battery pack 13 as a power source, it may be possible that the drive motor 4 of the cutting tool 1 may be driven with a supply of an AC power.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A water injection type cutting tool (1) comprising
a handle (10) configured to be grasped by a user,
a base (2) configured to contact an upper surface of a workpiece (W) to be cut, and
a tool unit (3) supported on an upper surface of the base (2),
wherein the tool unit (3) includes a cutter (5) and a water storage tank (20) positioned on opposite sides with respect to the handle (10) when viewed in a cut proceeding direction, the water storage tank (20) having a tank body (21) configured to store water that is injected on a cutting portion (C) of the cutter (5), which cuts the workpiece (W),
**characterized in that**
an end portion of the tank body (21) of the water storage tank (20) on a downstream side with respect to a direction of flow of water from the tank body (21) is positioned such that the end portion of the tank body (21) overlaps with the base (2) when viewed in a plan view, and
the tank body (21) is inclined such that a downstream side portion of the tank body (21) is closer to the cutting portion (C) of the cutter (5) than an upstream side portion of the tank body (21) when viewed in a plan view.

2. The water injection type cutting tool (1) according to claim 1, wherein the tank body (21) is inclined relative to a longitudinal axial line (H) of the handle (10) by a first angle (θ1) when viewed in a plan view, and the tank body (21) is inclined relative to a surface of the base (2) by a second angle (θ2) when viewed in a side view, and the second angle (θ2) is set to be larger than the first angle (θ1).

3. The water injection type cutting tool (1) according to claim 1 or 2, further comprising a hose connector (23) for connecting the tank body (21) of the water storage tank (20) to a water injection hose (30), wherein the hose connector (23) is positioned downwardly of a shoulder portion (21 c) of the tank body (21) when viewed in a side view.

4. The water injection type cutting tool (1) according to any one of the preceding claims, wherein the tool unit (3) includes a drive motor (4) having a motor housing (4a), and the tank body (21) is supported by the motor housing (4a) via a bracket (25).

5. The water injection type cutting tool (1) according to claim 4, wherein the bracket (25) includes a support rod (25c) extending in a substantially vertical direction, so that the weight of the water storage tank (20) is applied to the support rod (25c) in an axial direction of the support rod (25c).

6. The water injection type cutting tool (1) according to any one of claims 1 to 5, wherein the position of the tank body (21) is adjustable in a direction substantially perpendicular to the cut proceeding direction.

## Patentansprüche

1. Schneidewerkzeug (1) mit Wassereinspritzung, mit
einem Handgriff (10), der dazu konfiguriert ist, durch einen Benutzer gegriffen zu werden,
einer Basis (2), die dazu konfiguriert ist, eine obere Oberfläche eines zu schneidenden Werkstücks (W) zu berühren, und
einer Werkzeugeinheit (3), die an einer oberen Oberfläche der Basis (2) gelagert ist,
bei dem die Werkzeugeinheit (3) eine Schneide (5) und einen Wasserspeichertank (20) enthält, die an gegenüberliegenden Seiten in Bezug auf den Handgriff (10), wenn in einer Schneidefortschrittrichtung gesehen, positioniert sind, wobei der Wasserspeichertank (20) einen Tankkörper (21) aufweist, der zum Speichern von Wasser konfiguriert ist, das auf einen Schneideteil (C) der Schneide (5) gespritzt wird, welcher das Werkstück (W) schneidet,
**dadurch gekennzeichnet, dass**
ein Endteil des Tankkörpers (21) des Wasserspeichertanks (20) an einer stromabwärtigen Seite in Bezug auf eine Richtung der Wasserströmung aus dem Tankkörper (21) so positioniert ist, dass der Endteil des Tankkörpers (21) mit der Basis überlappt, wenn in einer Draufsicht gesehen, und
der Tankkörper (21) so geneigt ist, dass ein stromabwärtiger Teil des Tankkörpers (21) näher an dem Schneideteil (C) der Schneide (5) als ein stromaufwärtiger Teil des Tankkörpers (21) ist, wenn in einer Draufsicht gesehen.

2. Schneidewerkzeug (1) mit Wassereinspritzung nach Anspruch 1, bei dem der Tankkörper (21) relativ zu einer Längsachsenlinie (H) des Handgriffs (10) um einen ersten Winkel (θ1) geneigt ist, wenn in einer Draufsicht gesehen, und der Tankkörper (21) relativ zu einer Oberfläche der Basis (2) um einen zweiten Winkel (θ2) geneigt ist, wenn in einer Seitenansicht gesehen, und der zweite Winkel (θ2) so festgelegt ist, dass er größer als der erste Winkel (θ1) ist.

3. Schneidewerkzeug (1) mit Wassereinspritzung nach Anspruch 1 oder 2, das weiter einen Schlauchverbinder (23) zum Verbinden des Tankkörpers (21) des Wasserspeichertanks (20) mit einem Wasserspritzschlauch (30) aufweist, wobei der Schlauchverbinder (23) unterhalb eines Schulterteils (21c) des Tankkörpers (21) positioniert ist, wenn in einer Seitenansicht gesehen.

4. Schneidewerkzeug (1) mit Wassereinspritzung nach einem der vorhergehenden Ansprüche, bei dem die Werkzeugeinheit (3) einen Antriebsmotor (4) enthält, der ein Motorgehäuse (4a) aufweist, und der Tankkörper (21) durch das Motorgehäuse (4a) mittels einer Schelle (25) gelagert ist.

5. Schneidewerkzeug (1) mit Wassereinspritzung nach Anspruch 4, bei dem die Schelle (25) einen Lagerungsstab (25c) enthält, der sich im Wesentlichen in der vertikalen Richtung so erstreckt, dass das Gewicht des Wasserspeichertanks (20) dem Lagerungsstab (25c) in einer axialen Richtung des Lagerungsstabs (25c) aufgebracht wird.

6. Schneidewerkzeug (1) mit Wassereinspritzung nach einem der Ansprüche 1 bis 5, bei dem die Position des Tankkörpers (21) in einer Richtung im Wesentlichen senkrecht zu der Schneidefortschrittrichtung justierbar ist.

## Revendications

1. Outil de coupe de type à injection d'eau (1) comprenant
une poignée (10) configurée pour être saisie par un utilisateur,
une base (2) configurée pour entrer en contact avec une surface supérieure d'une pièce (W) à couper, et
une unité outil (3) supportée sur une surface supérieure de la base (2),
dans lequel l'unité outil (3) inclut un élément coupant (5) et un réservoir de stockage d'eau (20) positionné sur des côtés opposés par rapport à la poignée (10) quand on l'observe dans une direction d'avancement de coupe, le réservoir de stockage de coupe (20) ayant un corps de réservoir (21) configuré pour stocker de l'eau qui est injectée sur une partie de coupe (C) de l'élément coupant (5), qui coupe la pièce (W),
**caractérisé en ce que**
une partie d'extrémité du corps de réservoir (21) du réservoir de stockage de coupe (20) sur un côté aval par rapport à une direction d'écoulement d'eau depuis le corps de réservoir (21) est positionnée de telle sorte que la partie d'extrémité du corps de réservoir (21) chevauche la base (2) quand l'on observe sur une vue en plan, et
le corps de réservoir (21) est incliné de telle sorte qu'une partie côté aval du corps de réservoir (21) est plus proche de la partie de coupe (C) de l'élément coupant (5) qu'une partie côté amont du corps de réservoir (21) quand l'observe sur une vue en plan.

2. Outil de coupe de type à injection d'eau (1) selon la revendication 1, dans lequel le corps de réservoir (21) est incliné par rapport à une ligne axiale longitudinale (H) de la poignée (10) d'un premier angle (θ1) quand l'observe sur une vue en plan, et le corps de réservoir (21) est incliné par rapport à une surface de la base (2) d'un second angle (θ2) quand l'observe sur une vue latérale, et le second angle (θ2) est réglé pour être supérieur au premier angle (θ1).

3. Outil de coupe de type à injection d'eau (1) selon la revendication 1 ou 2, comprenant en outre un raccord de tuyau (23) pour raccorder le corps de réservoir (21) du réservoir de stockage d'eau (20) à un tuyau d'injection d'eau (30), dans lequel le raccord de tuyau (23) est positionné en aval d'une partie d'épaulement (21c) du corps de réservoir (21) quand on l'observe sur une vue en plan.

4. Outil de coupe de type à injection d'eau (1) selon l'une quelconque des revendications précédentes, dans lequel l'unité outil (3) inclut un moteur d'entraînement (4) ayant un carter de moteur (4a), et le corps de réservoir (21) est supporté par le carter de moteur (4a) par l'intermédiaire d'un support (25).

5. Outil de coupe de type à injection d'eau (1) selon la revendication 4, dans lequel le support (25) inclut une tige de support (25c) s'étendant dans une direction sensiblement verticale, de telle sorte que le poids du réservoir de stockage d'eau (20) est appliqué à la tige de support (25c)

6. Outil de coupe de type à injection d'eau (1) selon l'une quelconque des revendications 1 à 5, dans lequel la position du corps de réservoir (21) est ajustable dans une direction sensiblement perpendiculaire à la direction d'avancement de coupe.
